# EUROPÄISCHE PATENTANMELDUNG

(11) **EP 4 417 756 A1**
(43) Veröffentlichungstag der Anmeldung: **21.08.2024**
(21) Anmeldenummer: 23211274.8
(22) Anmeldetag: 21.11.2023
(51) Int. Cl.: E02F 9/20, B60K 31/00, E02F 9/24, E02F 9/26

(54) **MOBILE BAUMASCHINE MIT EINER LENKVORRICHTUNG**

(30) Priorität: 17.02.2023 DE 102023103951
(71) Anmelder: Weidemann GmbH, 34497 Korbach (DE)
(72) Erfinder: Schüttler, Torben, 34497 Korbach (DE); Fettke, Thorsten, 34477 Twistetal (DE)
(74) Vertreter: Otten, Roth, Dobler & Partner mbB Patentanwälte

(57) **Zusammenfassung**

Es wird eine mobile Baumaschine (1) mit einer Antriebseinheit zum Antreiben wenigstens eines Antriebselementes (17) vorgeschlagen, wobei wenigstens teilweise die Nachteile des Standes der Technik verbessert bzw. vermieden werden, insbesondere sollen v.a. wiederkehrende Arbeiten durch die Baumaschine (1) autonom abgearbeitet werden können und/oder es soll ermöglicht werden, dass die Baumaschine auch solche Arbeiten verrichten kann, ohne dass die Steuerung durch einen Bediener erfolgt. Dies wird erfindungsgemäß dadurch erreicht, dass wenigstens eine Kontrolleinheit zumindest eine Autonomiesteuereinheit zum autonomen Fahren und/oder Steuern der Baumaschine in einem Autonomiemodus aufweist, wobei wenigstens eine Abstands- und/oder Umgebungserfassungseinheit zum Erfassen der Umgebung und/oder eines Mindestabstandes zu der Baumaschine (1) vorgesehen ist, wobei die Abstands- und/oder Umgebungserfassungseinheit zumindest einen Fahrweg-Sensor zum Erfassen des Fahrweges innerhalb eines Sensorbereiches umfasst, wobei die Abstands- und/oder Umgebungserfassungseinheit wenigstens einen Sicherheitsraum (2) mit einer Grundfläche (3) ausbildet, wobei die Baumaschine (1) innerhalb/auf der Grundfläche (3) angeordnet ist.

## Beschreibung

Die Erfindung betrifft eine mobile Baumaschine, insbesondere Radlader, Teleskoplader, Bagger, Dumper, Bodenverdichtungsvorrichtung wie ein Vibrationsstampfer, eine Vibrationsplatte oder eine Walze, oder dergleichen, mit einem Tragrahmen und mit einer Antriebseinheit zum Antreiben wenigstens eines Antriebselementes sowie mit einer elektrischen und/oder elektronischen Kontrolleinheit.

### Stand der Technik

Mobile Baumaschine, insbesondere Radlader, Teleskoplader, Bagger, Dumper oder dergleichen, mit einem Fahrzeugrahmen und mit einer Antriebseinheit zum Antreiben wenigstens eines Antriebselementes wie eines Laufrades oder Laufkette, werden heutzutage meist mit einem nachfüllbaren Kraftstoff betrieben. Dabei kommen heute hauptsächlich dieselgetriebene Fahrzeuge zum Einsatz. Zwischenzeitlich sind bereits auch elektrisch angetriebene Maschinen im Einsatz.

Außer bei z.B. Radladern mit großen Schaufeln am Hubarm weisen moderne, mobile Baumaschinen vielfach lösbar verbindbare Arbeitswerkzeuge auf, z.B. die mittels sog.

"Schnellwechslern" bzw. "Wechselplatten" gehalten bzw. gelöst werden. Hierbei existieren neben "passiven" Arbeitswerkzeugen wie Schaufel, Ballen-Gabel oder dergleichen auch Arbeitswerkzeuge wie ein Kehrbesen, Mulcher, Greifarme, Greifschaufel, Hebegabeln oder dergleichen, die entsprechend ein "aktives" bzw. mit Energie antreibbares Werkzeug aufweisen.

Darüber hinaus sind auch Baumaschinen als Muldenkipper gebräuchlich, die als Arbeitswerkzeug eine kippbare Mulde aufweisen. Die kippbare Mulde kann entweder als Absetzmulde, die mittels schwenkbaren/kippbaren Hebelarmen des Baufahrzeugs aufgenommen oder z.B. auf den Boden abgesetzt werden kann, oder als Auflieger, der üblicherweise mittels Hydraulikzylinder zum Entladen angehoben bzw. gekippt werden kann, ausgebildet werden.

Es soll zukünftig autonome Baumaschinen geben, die gewisse Funktionen autonom ausführen, also ohne Steuerung und Überwachung durch einen Bediener. Diese Maschinen benötigen Sensoren, um deren Umfeld zu überwachen und eine sichere Funktion zu ermöglichen.

Derzeit werden die Baumaschinen jedoch noch durch einen Bediener bzw. Fahrer gesteuert, der auf der Maschine sitzt, z.B. bei einem Bagger, Radlader usw. auf einem ggf. teilweise "offenen" Steuerstand und/oder einer "geschlossenen" bzw. verschließbaren Fahrerkabine. Es gibt bereits diverse Hilfs- und Assistenzfunktionen, die die Arbeit erleichtern. Allerdings ist jedoch ein Bediener notwendig, der die Funktionen zumindest aktiviert und überwacht.

### Aufgabe und Vorteile der Erfindung

Aufgabe der Erfindung ist es demgegenüber, eine mobile Baumaschine vorzuschlagen, wobei wenigstens teilweise die Nachteile des Standes der Technik verbessert bzw. vermieden werden, insbesondere sollen v.a. wiederkehrende Arbeiten durch die Baumaschine autonom abgearbeitet werden können und/oder es soll ermöglicht werden, dass die Baumaschine auch solche Arbeiten verrichten kann, ohne dass die Steuerung durch einen Bediener erfolgt, und/oder es soll aber auch möglich bleiben, dass die Baumaschine wie herkömmlich durch einen Bediener gesteuert werden kann, wozu ein "üblicher" Steuerstand bzw. eine Fahrerkabine auf/an der Baumaschine vorzusehen ist.

Diese Aufgabe wird, ausgehend von einer mobilen Baumaschine der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Baumaschine v.a. dadurch aus, dass die elektrische und/oder elektronische Kontrolleinheit wenigstens eine Autonomiesteuereinheit zum autonomen Fahren und/oder Steuern der Baumaschine in einem Autonomiemodus aufweist, wobei wenigstens eine Abstands- und/oder Umgebungserfassungseinheit zum Erfassen der Umgebung und/oder eines Mindestabstandes zu der Baumaschine vorgesehen ist, wobei die Abstands- und/oder Umgebungserfassungseinheit zumindest einen Fahrweg-Sensor zum Erfassen des Fahrweges innerhalb eines Sensorbereiches umfasst, wobei die Abstands- und/oder Umgebungserfassungseinheit wenigstens einen Sicherheitsraum mit einer Grundfläche ausbildet, wobei die Baumaschine innerhalb/auf der Grundfläche angeordnet ist, wobei der Sicherheitsraum insbesondere als virtueller Sicherheitsraum ausgebildet ist.

Mit Hilfe des Sicherheitsraumes wird in vorteilhafter Weise um die Baumaschine ein mitbewegender/mitfahrender Pufferraum bzw. Pufferabstand generiert/vorgesehen, d.h. in der (horizontalen bzw. zweidimensionalen) Größe der sich mit bewegenden/fahrenden Grundfläche. Beispielsweise ist der Sicherheitsraum ein mit Hilfe der Sensorsignale bzw. Sensoren in Echtzeit vorzugsweise von der Kontrolleinheit generierter und/oder interaktiver und/oder virtueller Sicherheitsraum.

Für den Fall, dass ein Objekt, Gegenstand, Tier und/oder Mensch etc. an eine Grenze bzw. einen Rand, Seite bzw. Seitenfläche und/oder Seitenlinie der Grundfläche und/oder des Sicherheitsraumes erfasst bzw. sensiert wird, kann ein Eingriff bzw. eine Veränderung in der Fahrweise wie ein Ausweichen und/oder Verlangsamen bzw. Halten/Stoppen mittels der Kontrolleinheit bzw. Autonomiesteuereinheit und/oder der Lenk-/ Bremseinheit umgesetzt werden.

Vorteilhafterweise ist zumindest der Mindestabstand zwischen der Baumaschine und einer in Fahrtrichtung exponierten/ausgerichteten Vorderfläche des Sicherheitsraums angeordnet und zudem ist zumindest der Mindestabstand zwischen der Baumaschine und einer senkrecht zur Fahrtrichtung exponierten/ausgerichteten Seitenfläche des Sicherheitsraums angeordnet. Gerade bei der Vorwärtsfahrt bzw. in Fahrtrichtung betrachtet ist ein Mindestabstand von großem Vorteil. Mit der Vorderfläche, insb. vertikalen Seitenfläche, verbessert der Mindestabstand die Sicherheit beim Fahren/Bewegen der Baumaschine.

In einer vorteilhaften Variante der Erfindung ist der Mindestabstand zwischen der Baumaschine und der senkrecht zur Fahrtrichtung exponierten/ausgerichteten Seitenfläche des Sicherheitsraums beidseits der Baumaschine vorgesehen. Das bedeutet, dass die Seitenfläche parallel zur Fahrtrichtung angeordnet ist und beidseitig vorhanden ist, insb. rechts und links in Fahrtrichtung betrachtet.

In einer besonderen Weiterbildung der Erfindung ist die Grundfläche des Sicherheitsraums als Rechteck ausgebildet. Hiermit kann rundum ein vorteilhafter Abstand zur Baumaschine verwirklicht werden.

Vorzugsweise sind die Vorderfläche und die Seitenfläche/Seitenflächen vertikal ausgerichtet. Hierdurch können auch Gegenstände bzw. Hindernisse etc. in etwas höherer Position in vorteilhafter Weise erfasst werden und entspr. Maßnahmen wie Ausweichen oder Verlangsamen etc. eingeleitet werden. Beispielsweise ist der Sicherheitsraum der Baumaschine als Quader ausgebildet. Dies ist gerade auch bei Baustellenbedingungen und/oder bei Arbeiten auf einem Hof/Bauernhof oder dergleichen von großem Vorteil. So werden hierbei oftmals Arbeiten an und/oder innerhalb sowie außerhalb von Gebäuden, wie z.B. einer Halle, einem Stall, einer Scheune oder dergleichen, durchgeführt.

In einer vorteilhaften Ausführungsform der Erfindung umfasst die Abstands- und/oder Umgebungserfassungseinheit wenigstens einen Höhensensor zur Erfassung einer Durchfahrtshöhe. Vorteilhafterweise ist der Fahrweg-Sensor als Höhensensor ausgebildet. Hiermit können in vorteilhafter Weise Durchfahrten bzw. Öffnungen/Lücken an/in Gebäuden oder dergleichen überwacht werden. So kann ermittelt werden, ob die Baumaschine durch die Durchfahrt bzw. Öffnung/Lücke hindurch reicht, insb. nicht größer/höher als die Durchfahrt bzw. Öffnung/Lücke ist. Entsprechendes kann auch bzgl. der Breite der Baumaschine verwirklicht werden.

Beispielsweise ist die Durchfahrtshöhe unterschiedlich, insb. kleiner als die Höhe des Sicherheitsraums und/oder des Quaders. Vorteilhafterweise ist die Durchfahrtshöhe die Höhe des Sicherheitsraums und/oder des Quaders. So kann der Aufwand für die Ermittlung bzw. Berechnung der Höhe/Durchfahrtshöhe bzw. des Sicherheitsraumes/Quaders verringert werden.

In einer besonderen Weiterbildung weist die Kontrolleinheit wenigstens und/oder die Autonomiesteuereinheit und/oder die Abstands- und/oder Umgebungserfassungseinheit wenigstens eine Trigonometrie-Berechnungseinheit zum Berechnen/Ermitteln der Durchfahrtshöhe und/oder der Höhe des Sicherheitsraums und/oder des Quaders mit Hilfe von trigonometrischer Berechnungsverfahren auf. Hiermit in vorteilhafter Weise die Höhe/Durchfahrtshöhe in Abhängigkeit des (erfassten/ermittelten/berechneten) Abstandes des erfassten/sensierten Objektes bzw. Öffnung ermittelt und/oder generiert werden, insb. mittels der Kontrolleinheit und/oder Abstands-/Umgebungserfassungseinheit.

Vorteilhafterweise ist die Kontrolleinheit wenigstens und/oder die Autonomiesteuereinheit und/oder die Abstands- und/oder Umgebungserfassungseinheit derart ausgebildet, dass in Bezug auf die Baumaschine wenigstens eine Relativbewegung eines Objektes innerhalb der erfassten Umgebung und/oder des Erfassungs-/ Sensorbereiches ermittelbar ist. Hierbei ist eine (gewisse) Zeitdauer bzw. Erfassungsphase von Vorteil, um in vorteilhafter Weise eine Veränderung des Abstands zum Objekt zu erfassen/ermitteln. Dies kann sowohl während der Fahrt/Bewegung als auch im Stillstand der Baumaschine verwirklicht werden.

Grundsätzlich ist eine kontinuierliche Erfassung des Abstandes bzw. der Umgebung von großem Vorteil. Es kann jedoch auch eine periodische Erfassung, d.h. in ggf. sehr kurzen Zeitabständen von z.B. wenigen Millisekunden bzw. Sekunden/-bruchteilen, verwirklicht werden.

Vorteilhafterweise ist die Kontrolleinheit wenigstens und/oder die Autonomiesteuereinheit und/oder die Abstands- und/oder Umgebungserfassungseinheit derart ausgebildet, dass das Objekte als Lebewesen, insb. als Mensch und/oder als Tier, identifizierbar ist. Dies ist gerade bei einer Verwendung als Hoflader bzw. als Baumaschine für einen Hof/Bauernhof von großem Vorteil.

In einer besonderen Weiterbildung der Erfindung ist die Kontrolleinheit und/oder die Autonomiesteuereinheit und/oder die Abstands- und/oder Umgebungserfassungseinheit derart ausgebildet, dass in Abhängigkeit der Relativbewegung des Objektes und/oder der Geschwindigkeit der Baumaschine der Mindestabstand veränderbar ist, insb. ist der Mindestabstand größer bei einer größeren Relativbewegung des Objektes und/oder der Geschwindigkeit der Baumaschine als bei einer kleineren Relativbewegung des Objektes und/oder der Geschwindigkeit der Baumaschine. Hiermit wird die Betriebssicherheit bzw. die Sicherheit bzgl. der autonomen Fahrweise weiter verbessert.

Vorteilhafterweise ist die Abstands- und/oder Umgebungserfassungseinheit und/oder der Fahrweg-Sensor und/oder der Höhensensor zumindest in einer Fahrzeughöhe von mindestens 25cm oder 50cm an der Baumaschine angeordnet. Hiermit werden in vorteilhafter Weise ggf. vorhandene Störungen auf dem Boden wirkungsvoll vermindert bzw. reduziert. Beispielsweise ist die Anordnung auf Hüfthöhe oder auf einem Kabinendach und/oder dem oberen Ende bzw. am höchsten Bereich der Baumaschine.

Generell kommen verschiedene Sensoren bzw. Erfassungsarten in Frage. Beispielsweise kann ein Radarsensor von Vorteil sein, insb. für die Höhenerfassung eines Objektes und/oder einer Durchfahrtshöhe. Vorteilhafterweise ist die Abstands- und/oder Umgebungserfassungseinheit und/oder der Fahrweg-Sensor und/oder der Höhensensor als Ultraschall-Sensor ausgebildet. Es hat sich in ersten Versuchen gezeigt, dass mittels Ultraschall eine sehr präzise und kostengünstige Erfassung des Abstands bzw. der Umgebung verwirklicht werden kann.

Darüber hinaus sind nachfolgende Merkmale oder Funktionen der Erfindung einzeln als auch in verschiedenen Kombinationen von Vorteil, z.B.
auf der Maschine sind Sensoren die das direkte Umfeld überwachen, die Sensoren haben z.B. einen Erfassungsbereich von max. 5m,
die Sensoren sind derart angeordnet, dass sie das gesamte Umfeld der Maschine abdecken,
die Anzahl der Sensoren ist variabel bzw. kann an unterschiedlichste Anwendungsfälle bzw. Einsatzgebiete angepasst werden,
auch die Position der Sensoren ist variabel bzw. kann an unterschiedlichste Anwendungsfälle bzw. Einsatzgebiete angepasst werden,
bevorzugt sind die Sensoren auf einer Höhe von mindestens 25cm angeordnet,
die Kontrolleinheit bzw. ein Steuergerät wertet die Daten der Sensoren aus und erkennt, ob sich z.B. innerhalb des Erfassungsbereichs ein Hindernis bzw. Objekt befindet und/oder wie es sich relativ zur Maschine verhält,
innerhalb des Erfassungsbereichs gibt es um die Maschine einen Sicherheitsbereich bzw. den Sicherheitsraum, vorzugsweise mit einem oder mehreren festgelegten Mindestabständen,
in Abhängigkeit vom relativen Verhalten des Objekts zur Maschine, kann der zulässige Mindestabstand zur Maschine
festgelegt/verändert bzw. angepasst werden,
bei feststehenden/unbewegten Objekten kann z.B. der Sicherheitsbereich bzw. Sicherheitsraum klein gewählt bzw. festgelegt/verändert werden, z.B. ca. 40 cm oder ca. 80cm, beispielsweise bei einer Fahrt entlang einer
bekannten/unbedenklichen Umgebung wie z.B. entlang eines Fressgitters in einem Stall oder dergleichen,
bei Objekten, die sich seitlich in Richtung auf die Maschine zu bewegen, kann der Sicherheitsbereich bzw. Sicherheitsraum größer gewählt bzw. festgelegt/verändert/angepasst werden, z.B. ca. 1,50m oder ca. 2m,
der Sicherheitsbereich bzw. Sicherheitsraum kann auch in Abhängigkeit von der relativen Geschwindigkeit zwischen Maschine und dem Objekt festgelegt/verändert/angepasst werden,
bewegt sich z.B. ein Objekt schnell auf die Maschine zu, kann/wird der Sicherheitsbereich bzw. Sicherheitsraum größer gewählt bzw. festgelegt/verändert/angepasst werden, als wenn sich ein Objekt langsamer auf die Maschine zubewegt.

Vorteilhafterweise können zusätzliche, weitere bzw. spezielle Sensoren vorgesehen werden, die die Durchfahrtshöhe der Maschine überwachen/erfassen. Hierzu können z.B. auf der Kabine in und gegen der Fahrtrichtung ausgerichtete Sensoren positioniert sein, die z.B. in vorteilhafter Weise ein Lichtraumprofil oder dergleichen abtasten. Wird z.B. erkannt, dass die Durchfahrtshöhe für die Maschine nicht ausreichend ist, oder dass ein Gegenstand in den Fahrweg ragt, kann die Maschine diesem z.B. ausweichen oder stoppen.

Bei der Baumaschine gemäß der Erfindung kann es sich unter anderem um ein landwirtschaftliches Fahrzeug handeln. Alle Sensoren werden in vorteilhafter Weise derart positioniert bzw. angeordnet, dass diese z.B. nicht durch hohes Gras oder das Einstreu in einem Stall oder dergleichen gestört/beeinträchtigt oder verschmutzt werden. So sind die Sensoren deshalb in einer Höhe von mindestens 25cm angeordnet, bevorzugt sind die Sensoren zumindest in Kniehöhe oder Hüfthöhe angeordnet, d.h. ca. 50cm bis 1 Meter.

Als Sensoren können beispielsweis Ultraschallsensoren, Infrarot-, Radar-, Lidar- und/oder optische Sensoren und/oder Kameras mit Bild- bzw. Mustererkennung oder andere geeignete Sensoren genützt werden. Auch eine Kombination aus verschiedenen Arten von Sensoren ist von Vorteil. Eine solche Kombination kann z.B. zur Geschwindigkeitsermittlung von Objekten sinnvoll sein.

Für eine Funktion des autonomen Betriebs gemäß der Erfindung ist die Kontrolleinheit bzw. eine Steuereinheit von Vorteil, in der z.B. eine auszuführende Funktion bzw. ein Arbeitsauftrag abgespeichert ist. Der Arbeitsauftrag kann beispielsweise darin bestehen eine Transportaufgabe auszuführen oder die Maschine zu einer vorgegebenen Position zu bewegen und dort einen Arbeitsauftrag zu erfüllen. Die Kontrolleinheit bzw. Steuereinheit kann zudem ggf. auch die Position der Maschine mit geeigneten Mitteln ermitteln, z.B. GPS bzw. Triangulationsverfahren oder dergleichen.

Vorteilhafterweise ist in einem elektrischen/elektronischen Speicher eine Karte bzw. Landschaft und/oder Plan bzw. Koordinaten etc. abgelegt, mittels der die Maschine einen Fahrweg berechnen kann. Die Kontrolleinheit bzw. Steuereinheit empfängt z.B. in vorteilhafter Weise die Daten der Sensoren, die das Umfeld überwachen. Sofern die Kontrolleinheit bzw. Steuereinheit im Sicherheitsbereich bzw. Sicherheitsraum kein Hindernis bzw. Objekt wahrnehmen kann, kann die Kontrolleinheit bzw. Steuereinheit eine Fahrbewegung aktivieren. Bei Erkennung eines Hindernisses/Objektes kann die Kontrolleinheit bzw. Steuereinheit vorteilhafte Maßnahmen einleiten, um eine Gefahrensituation zu verhindern.

Es kann beispielsweise eine Routenänderung gewählt werden, um einen ausreichenden Sicherheitsabstand zum Hindernis/Objekt einzuhalten. Alternativ kann die Fahrbewegung gestoppt werden, um bei einem in Bewegung befindlichen Hindernis abzuwarten und die Fahrt dann später fortzusetzen.

### Ausführungsbeispiel

Ein Ausführungsbeispiel der Erfindung ist in der Zeichnung dargestellt und wird anhand der einzigen Figur nachfolgend näher erläutert.
- Figur 1: eine schematische, perspektivische Ansicht einer ersten, mobilen Arbeitsmaschine mit Fahrerkabine und Sicherheitsraum gemäß der Erfindung,
- Figur 2: eine schematische Draufsicht auf eine zweite, mobile Arbeitsmaschine mit Erfassungsbereichen von Sensoren gemäß der Erfindung,
- Figur 3: eine schematische Seitenansicht der zweiten, mobilen Arbeitsmaschine gemäß Figur 2 mit den in Längsrichtung ausgerichteten Erfassungsbereichen und
- Figur 4: eine schematische Frontansicht der zweiten, mobilen Arbeitsmaschine gemäß Figur 2 mit den in Querrichtung ausgerichteten Erfassungsbereichen.

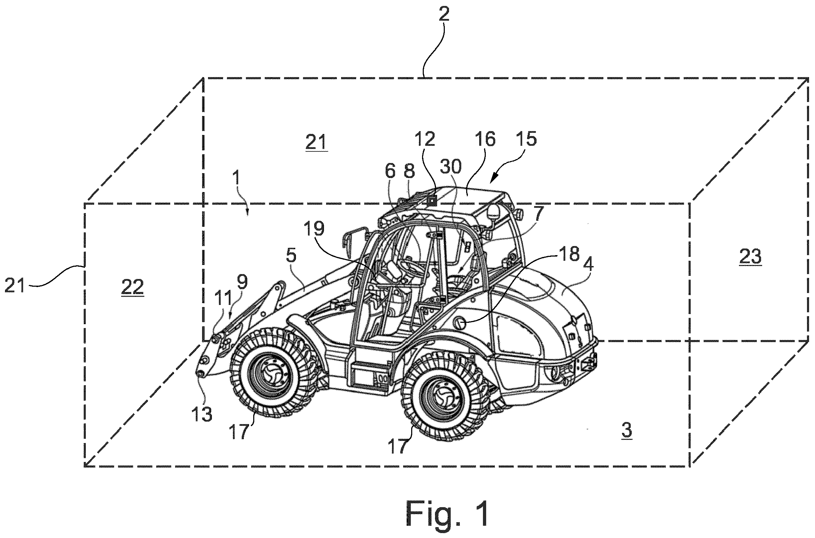

In Figur 1 ist ein Radlader 1 bzw. eine mobile Arbeitsmaschine 1 ohne einem Anbaugerät bzw. einem Arbeitswerkzeug schematisch und perspektivisch dargestellt. Bei dem Arbeitswerkzeug kann es sich beispielsweise um eine sog. "Greifschaufel" handeln, z.B. für Baumaterial wie Kies oder Sand.

Ohne nähere Darstellung weist das Antriebsfahrzeug 4 unter einer Haube 4 oder dergleichen in vorteilhafter Weise einen Antriebsmotor, insbesondere ein Elektromotor, sowie ggf. eine optional vorzusehende, nicht näher dargestellte Hydraulikpumpe auf, um einerseits die elektrische Antriebsenergie für Antriebsräder 17, insbesondere für einen Allradantrieb, und andererseits die Hydraulikenergie z.B. für einen Hubarm 5, eine Lenkung 6, und ggf. für das Arbeitswerkzeug bzw. die Greifschaufel, bzw. für Hydraulikzylinder etc. zur Verfügung zu stellen und diese entsprechend betreiben zu können.

Für das Laden eines nicht näher dargestellten elektrischen Speichers/Akkus ist in vorteilhafter Weise ein Anschluss bzw. eine Ladebuchse 18 vorgesehen.

Der Radlader 1 bzw. die mobile Arbeitsmaschine 1 kann jedoch auch rein elektrisch betreiben werden. Das bedeutet dann, dass sowohl die Antriebsenergie mittels Elektromotor und elektrischem Speicher/Akku als auch die Hubenergie bzw. die Hebeenergie für den Hubarm 5 und ggf. für ein rein elektrisches Anbaugerät als elektrische Energie in dem nicht näher dargestellten elektrischen Speicher/Akku gespeichert ist.

Ein (nicht abgebildeter) Fahrer steuert im manuellen Betrieb die Arbeitsmaschine 1 bzw. das Arbeitswerkzeug von einem Fahrersitz 7 aus und hat hierfür neben der Lenkung 6 zudem ein Bedienelement 8 bzw. einen sog. "Steuerknüppel" 8, d.h. auch als sog. "Joystick" 8 bezeichnet/bekannt, zur Verfügung.

Zudem ist bei derartigen Radladern 1 oftmals in einer Fahrerkabine 15 mit Tür 19 bzw. für den Fahrer neben dem Bedienelement 8 bzw. Joystick 8 ein weiterer, d.h. zweiter, vom Bedienelement 8 weit beabstandeter Schalter/Taster 30 vorhanden, um weitere Funktionalitäten zu verwirklichen.

Darüber hinaus besitzt der Radlader 1 eine Werkzeughaltevorrichtung 9 bzw. ein sog. "Schnellwechselsystem" bzw. eine sog. "Schnellwechselplatte", die z.B. Zapfen 11, 13 oder dergleichen aufweisen und mit Aufnahmen des Arbeitswerkzeugs in Wirkverbindung stehen können, so dass unterschiedlichste Arbeitswerkzeuge wie Schaufel, Hubgabeln, Greifer, Kehrbesen, Schneepfluge etc. schnell und ohne großen Aufwand am Hubarm 5 an- und abgekoppelt, d.h. ausgewechselt, werden können.

Für einen autonomen Betrieb bzw. ein Fahren ohne Fahrer ist in Figur 1 ein Sicherheitsraum 2 gemäß der Erfindung schematisch dargestellt. Dieser Sicherheitsraum 2 ist als Quader ausgebildet und weist eine Grundfläche 3 bzw. ein Rechteck 3 sowie zwei parallel zur Fahrtrichtung angeordnete Seitenflächen 21 und eine Vorderseite 22 sowie eine Rückseite 23 auf. Eine der Grundfläche 3 gegenüberliegende bzw. Decke des Quaders ist von untergeordneter Bedeutung und wird vielmehr durch die vertikalen Flächen 21 bis 23 definiert/festgelegt. Eine besondere "Überwachung" ist bzgl. der Decke nicht zwingend notwendig.

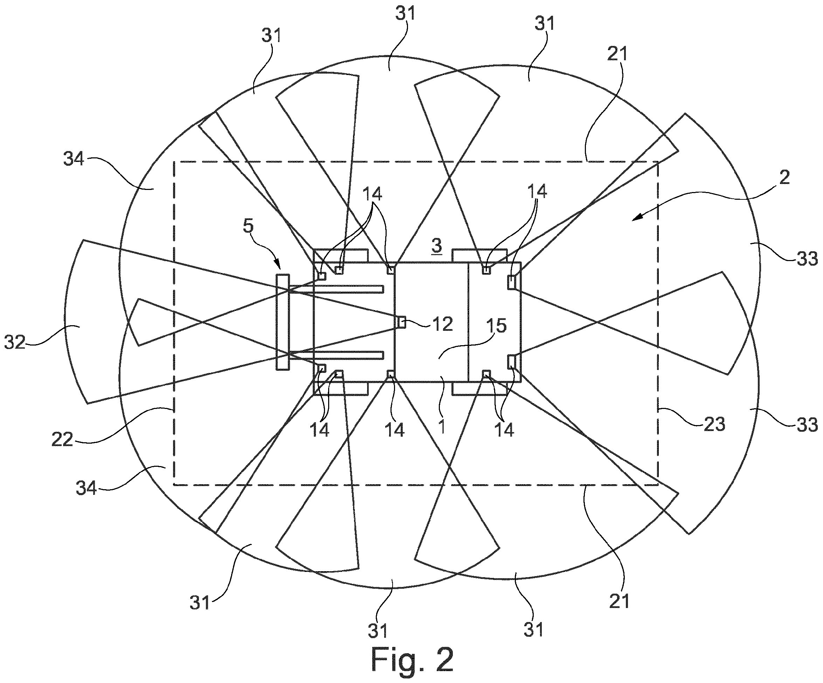

Lediglich aus Gründen der Übersichtlichkeit sind in Figur 1 die Sensor-Erfassungsbereiche 31, 32, 33, 34 bzw. sog. Sensorkeulen nicht abgebildet. Diese sind jedoch z.B. in Figur 2, d.h. in einer Draufsicht, abgebildet. So weisen Abstands- bzw. Umgebungssensoren 14, z.B. Ultraschall-Sensoren 14, unterschiedlich ausgerichtete Erfassungsbereiche 31, 34 auf, mit denen die seitliche Umgebung (Erfassungsbereiche 31) und z.T. auch nach vorne bzw. die Vorderseite (Erfassungsbereiche 34) erfassbar bzw. detektierbar ist. Hintere Sensoren 14 weisen nach hinten ausgerichtete Erfassungsbereiche 33 auf, die Umgebung bzw. den Abstand nach hinten, z.B. bei einer sog. "Rückwärtsfahrt" überwachen bzw. detektieren können.

Weiterhin ist wenigstens ein Frontsensor 12, z.B. als Radarsensor 12 ausgebildet, der vor allem für die Vorwärtsfahrt von besonderer Bedeutung ist und einen nach vorne, insb. mittig angeordneten, ausgerichteten Erfassungsbereich 32 aufweist. Ohne nähere Darstellung kann auch ein entspr. Sensor 12 (nicht dargestellt) für die Rückwärtsfahrt mit einem entspr. nach hinten ausgerichteten Erfassungsbereich vorgesehen werden. Der Sensor 12 ist u.a. als Höhensensor 12 ausgebildet und in vorteilhafter Weise an der Kabine 15, insb. am Kabinendach 16, angeordnet bzw. positioniert. Hierdurch kann dieser in vorteilhafter Weise eine Höhe bzw. Größe eines Objektes und/oder für eine Durchfahrt durch eine Öffnung, Lücke, Tunnel, Tür oder dergleichen erfassen. Mit Hilfe einer vorteilhaften elektrischen und/oder elektronischen Kontrolleinheit, insb. einem Mikroprozessor etc., kann ggf. mittels Trigonometrischer Berechnungsverfahren mit der Höhe bzw. Größe des Objektes bzw. der lichten Öffnung und dessen Abstand ermittelt werden, ob die Baumaschine hindurch passt oder ob die Öffnung/Höhe zu niedrig ist.

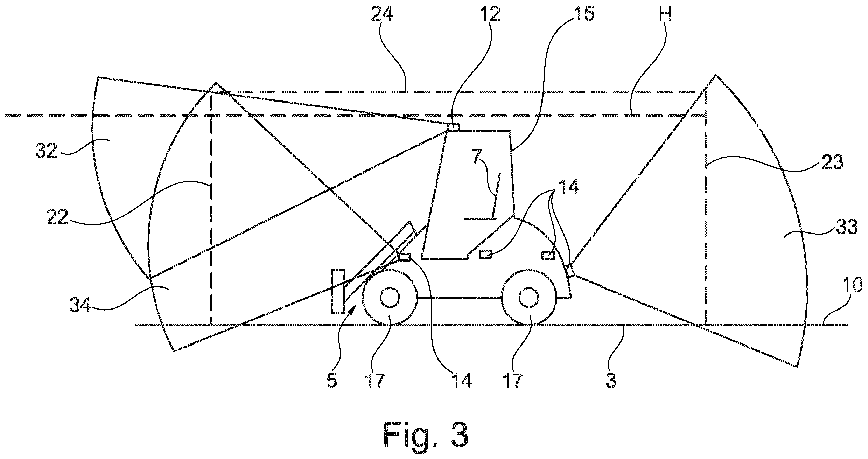

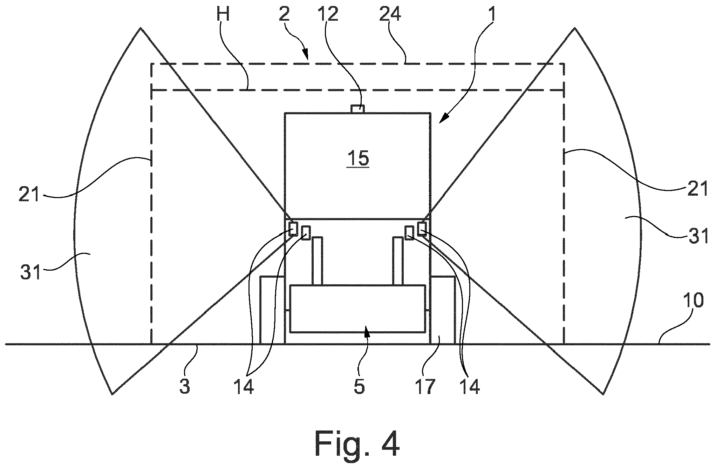

In den Figuren 3 und 4 sind lediglich aus Gründen der Übersichtlichkeit nur einzelne Erfassungsbereiche dargestellt. So sind in der Seitenansicht gemäß Figur 3 nur die längs der Längsachse bzw. Fahrtrichtung ausgerichteten Erfassungsbereiche 32, 33, 34 dargestellt und die seitlichen Erfassungsbereiche sind nicht dargestellt. Entsprechend sind in der Vorderansicht gemäß Figur 4 nur die quer/senkrecht zur Längsachse bzw.

Fahrtrichtung ausgerichteten Erfassungsbereiche 31 dargestellt und die anderen Erfassungsbereiche 32, 33, 34 sind nicht dargestellt.

So wird v.a. in der Zusammenschau der Figuren 2 bis 4 deutlich, dass dies Summe bzw. der Raum aller Erfassungsbereiche 31, 32, 33, 34 den Sicherheitsraum 2 mit seinen (vertikalen) Seitenflächen 21, 22, 23 umfassen. Mit Hilfe der Kontrolleinheit bzw. Abstands- und/oder Umgebungserfassungseinheit gemäß der Erfindung können in vorteilhafter Weise die Seitenflächen 21, 22, 23 generiert bzw. berechnet werden, insb. als virtuelle Flächen. Beispielsweise sind vorteilhafte Abstände zum Fahrzeug 1 hinterlegt, so dass die Seitenflächen 21, 22, 23 während der Fahrt mit dem Fahrzeug 1 sich mitbewegen bzw. mitfahren. Dementsprechend bewegt sich die Grundfläche 3, auf/in dem das Fahrzeug 1 angeordnet ist, immer mit. Sobald nun ein Objekt in den Sicherheitsraum 2 angrenzt bzw. in Kontakt mit den Seitenflächen 21, 22, 23 kommt, d.h. den Mindestabstand unterschreitet, der durch die Seitenflächen 21, 22, 23 definiert ist, wird eine Beeinflussung der Fahrt des Fahrzeugs 1 vorgenommen, z.B. gebremst und/oder gelenkt.

Gerade die Sensoren 12 weisen einen besonderen Erfassungsbereich 32 auf, der vergleichsweise lang bzw. weitreichend ist, ggf. jedoch relativ schmal ausgebildet ist, und v.a. für eine Höhenerfassung vorgesehen ist. Hiermit kann eine Höhe H für eine reibungslose Durchfahrt durch eine Öffnung wie z.B. eine Tür etc., ermittelt werden. Die Höhe H kann von der Quaderhöhe des Sicherheitsraumes 21 abweichen, insb. etwas kleiner/niedriger ausgebildet werden, wie z.B. in Figur 3 beispielhaft dargestellt.

## Patentansprüche

1. Mobile Baumaschine (1), insbesondere Radlader, Teleskoplader, Bagger, Dumper, Bodenverdichtungsvorrichtung wie ein Vibrationsstampfer, eine Vibrationsplatte oder eine Walze, oder dergleichen, mit einem Tragrahmen und mit einer Antriebseinheit zum Antreiben wenigstens eines Antriebselementes (17), z.B. Antriebsrad/-walze und/oder Kettenfahrwerk oder Vibrationselement, und/oder eines Arbeitswerkzeuges, z.B. Greif-/Schaufel, Gabel, Vibrationselement, Fräse, Räumschild, Mulde oder dergleichen, wobei die Antriebseinheit wenigstens einen Antriebsmotor, insb. einen Verbrennungsmotor und/oder einen Elektromotor und/oder einen Hydraulikmotor, und eine Lenkvorrichtung (6) zum Lenken der Baumaschine (1) in Richtung eines Fahrweges und eine Werkzeugaufnahme zum Aufnehmen und/oder Halten/Fixieren des Arbeitswerkzeuges und/oder eine Hubeinrichtung (5), insb. Hubarm, Greifarm, Teleskoparm, Muldenkippeinheit oder dergleichen, aufweist, wobei wenigstens eine elektrische und/oder elektronische Kontrolleinheit zum Kontrollieren der Antriebseinheit und/oder des Antriebsmotors und/oder der Lenkvorrichtung und/oder der Hubeinrichtung (5) und/oder des Arbeitswerkzeuges und/oder der Werkzeugaufnahme vorgesehen ist, wobei die elektrische und/oder elektronische Kontrolleinheit wenigstens eine Autonomiesteuereinheit zum autonomen Fahren und/oder Steuern der Baumaschine (1) in einem Autonomiemodus aufweist, wobei wenigstens eine Abstands- und/oder Umgebungserfassungseinheit zum Erfassen der Umgebung und/oder eines Mindestabstandes zu der Baumaschine vorgesehen ist, wobei die Abstands- und/oder Umgebungserfassungseinheit zumindest einen Fahrweg-Sensor (12, 14) zum Erfassen des Fahrweges innerhalb eines Sensorbereiches (31, 32, 33, 34) umfasst, wobei die Abstands- und/oder Umgebungserfassungseinheit wenigstens einen Sicherheitsraum (2) mit einer Grundfläche (3) ausbildet, wobei die Baumaschine (1) innerhalb/auf der Grundfläche (3) angeordnet ist.

2. Baumaschine nach Anspruch 1, **dadurch gekennzeichnet, dass** zumindest der Mindestabstand zwischen der Baumaschine (1) und einer in Fahrtrichtung exponierten/ausgerichteten Vorderfläche (22) des Sicherheitsraums (2) angeordnet ist und wobei zumindest der Mindestabstand zwischen der Baumaschine (1) und einer senkrecht zur Fahrtrichtung exponierten/ausgerichteten Seitenfläche (21) des Sicherheitsraums (2) angeordnet ist.

3. Baumaschine nach einem der vorgenannten Ansprüche, **dadurch gekennzeichnet, dass** der Mindestabstand zwischen der Baumaschine (1) und der senkrecht zur Fahrtrichtung exponierten/ausgerichteten Seitenfläche (21) des Sicherheitsraums (2) beidseits der Baumaschine (1) vorgesehen ist.

4. Baumaschine nach einem der vorgenannten Ansprüche, **dadurch gekennzeichnet, dass** die Grundfläche (3) des Sicherheitsraums (2) als Rechteck ausgebildet ist.

5. Baumaschine nach einem der vorgenannten Ansprüche, **dadurch gekennzeichnet, dass** die Vorderfläche (22) und die Seitenfläche/Seitenflächen (21) vertikal ausgerichtet sind.

6. Baumaschine nach einem der vorgenannten Ansprüche, **dadurch gekennzeichnet, dass** der Sicherheitsraum (2) der Baumaschine (1) als Quader ausgebildet ist.

7. Baumaschine nach einem der vorgenannten Ansprüche, **dadurch gekennzeichnet, dass** die Abstands- und/oder Umgebungserfassungseinheit wenigstens einen Höhensensor (12) zur Erfassung einer Durchfahrtshöhe (H) umfasst.

8. Baumaschine nach einem der vorgenannten Ansprüche, **dadurch gekennzeichnet, dass** der Fahrweg-Sensor (12) als Höhensensor (12) ausgebildet ist.

9. Baumaschine nach einem der vorgenannten Ansprüche, **dadurch gekennzeichnet, dass** die Durchfahrtshöhe (H) die Höhe des Sicherheitsraums (2) und/oder des Quaders ist.

10. Baumaschine nach einem der vorgenannten Ansprüche, **dadurch gekennzeichnet, dass** die Kontrolleinheit wenigstens und/oder die Autonomiesteuereinheit und/oder die Abstands- und/oder Umgebungserfassungseinheit wenigstens eine Trigonometrie-Berechnungseinheit zum Berechnen/Ermitteln der Durchfahrtshöhe (H) und/oder der Höhe des Sicherheitsraums (2) und/oder des Quaders mit Hilfe von trigonometrischer Berechnungsverfahren aufweist.

11. Baumaschine nach einem der vorgenannten Ansprüche, **dadurch gekennzeichnet, dass** die Kontrolleinheit wenigstens und/oder die Autonomiesteuereinheit und/oder die Abstands- und/oder Umgebungserfassungseinheit derart ausgebildet ist, dass in Bezug auf die Baumaschine (1) wenigstens eine Relativbewegung eines Objektes innerhalb der erfassten Umgebung und/oder des Erfassungs-/Sensorbereiches (31, 32, 33, 34) ermittelbar ist.

12. Baumaschine nach einem der vorgenannten Ansprüche, **dadurch gekennzeichnet, dass** die Kontrolleinheit wenigstens und/oder die Autonomiesteuereinheit und/oder die Abstands- und/oder Umgebungserfassungseinheit derart ausgebildet ist, dass das Objekte als Lebewesen, insb. als Mensch und/oder als Tier, identifizierbar ist.

13. Baumaschine nach einem der vorgenannten Ansprüche, **dadurch gekennzeichnet, dass** die Kontrolleinheit und/oder die Autonomiesteuereinheit und/oder die Abstands- und/oder Umgebungserfassungseinheit derart ausgebildet ist, dass in Abhängigkeit der Relativbewegung des Objektes und/oder der Geschwindigkeit der Baumaschine (1) der Mindestabstand veränderbar ist, insb. ist der Mindestabstand größer bei einer größeren Relativbewegung des Objektes und/oder der Geschwindigkeit der Baumaschine (1) als bei einer kleineren Relativbewegung des Objektes und/oder der Geschwindigkeit der Baumaschine (1).

14. Baumaschine nach einem der vorgenannten Ansprüche, **dadurch gekennzeichnet, dass** die Abstands- und/oder Umgebungserfassungseinheit und/oder der Fahrweg-Sensor (12, 14) und/oder der Höhensensor (12) zumindest in einer Fahrzeughöhe von mindestens 25cm oder 50cm an der Baumaschine (1) angeordnet ist.

15. Baumaschine nach einem der vorgenannten Ansprüche, **dadurch gekennzeichnet, dass** die Abstands- und/oder Umgebungserfassungseinheit und/oder der Fahrweg-Sensor (12, 14) und/oder der Höhensensor (12) als Ultraschall-Sensor ausgebildet ist.
